# EUROPÄISCHE PATENTSCHRIFT

(11) **EP 1 784 897 B1**
(45) Veröffentlichungstag und Bekanntmachung des Hinweises auf die Patenterteilung: **26.08.2009**
(21) Anmeldenummer: 05761126.1
(22) Anmeldetag: 30.06.2005
(51) Int. Cl.: H01R 39/38, H02K 5/14

(54) **SCHLEIFKÖRPERHALTER**
CONTACT BRUSH HOLDER
SUPPORT POUR FROTTEURS

(30) Priorität: 27.08.2004 DE 102004041490
(43) Veröffentlichungstag der Anmeldung: 16.05.2007
(73) Patentinhaber: ROBERT BOSCH GMBH, 70442 Stuttgart (DE)
(72) Erfinder: KUENZEL, Gerald, 77839 Lichtenau (DE); BERNAUER, Christof, 76596 Hundsbach (DE); BAUER, Christian, 77886 Lauf (DE)
(86) Internationale Anmeldenummer: PCT/EP2005/053101
(87) Internationale Veröffentlichungsnummer: WO 2006/024563

(56) Entgegenhaltungen:
- WO-A-00/19584
- CH-A- 493 115
- DE-A1- 19 750 038
- PATENT ABSTRACTS OF JAPAN Bd. 1995, Nr. 01, 28. Februar 1995 (1995-02-28) & JP 06 295946 A (HITACHI LTD), 21. Oktober 1994 (1994-10-21)

## Beschreibung

### Stand der Technik

Die Erfindung geht aus von einem Schleifkörperhalter zum elektrischen Kontaktieren eines Rotors, insbesondere von einem Bürstenhalter für eine Kommutator- oder Schleifringmaschine, nach dem Oberbegriff des Anspruchs 1.

Die DE-A-19750038 offenbart einen Elektromotor, bei dem zur elektrischen Kontaktierung des Kollektors Kohlebürsten mit einer vorgespannten Feder gegen den Kollektor gepresst werden. Die Kohlebürsten sind hierzu an bügelförmigen Federn befestigt, wobei die Enden der Federn zu deren Befestigung jeweils um dafür vorgesehene Haltebolzen herumgeführt sind.

Eine bekannte Vorrichtung zur Kontaktierung von Lamellen eines Kommutators oder Kollektors eines Elektromotors (DE 197 50 038 A1 gemäß dem Oberbegriff des Anspruchs 1) weist, auf diametralen Seiten des Kollektors angeordnet, jeweils eine gewölbte Blattfeder aus einem Materialstreifen, z.B. Federblech, auf, die mittig eine Kohlebürste trägt und endseitig an dem Träger befestigt ist. Der Träger ist von einem Lagerschild gebildet, in dem die den Kollektor und den Rotor des Elektromotors drehfest tragende Motorwelle gelagert ist. Am Lagerbolzen stehen vier Haltebolzen axial ab, in denen die Enden der beiden Blattfedern festgespannt sind. Jeweils ein Haltebolzen eines Bolzenpaars weist einen elektrischen Kontakt auf, der über eine elektrische Anschlusslitze mit der Kohlebürste verbunden ist. Die Kohlebürste trägt auf ihrer vom Kollektor abgekehrten Stirnseite einen hervorstehenden Zapfen, der eine in der Blattfeder mittig angeordnete Ausnehmung durchdringt. Die Blattfeder hat im Bereich der Aussparung zwei einander gegenüberstehende Biegelaschen, die zur Befestigung an der Kohlebürste dienen. Um eine Verkantung der Kohlebürsten im Betrieb des Elektromotors zu vermeiden, ist der Zapfen und die Aussparung mehrkantig ausgebildet.

### Vorteile der Erfindung

Der erfindungsgemäße Schleifkörperhalter, insbesondere der erfindungsgemäße Bürstenhalter, mit den Merkmalen des Anspruchs 1 hat den Vorteil, dass nicht nur durch die beidseitige Einspannung der Blattfeder eine genaue Positionierung des Schleifkörpers auf dem Rotor und ein gleichmäßiger Lauf des Schleifkörpers in beiden Drehrichtungen des Rotors gewährleistet ist, sondern auch aufgrund der vorgenommenen Schwingungsentkopplung die Schwingungen des Schleifkörpers, zu denen der Schleifkörper durch Unrundheiten des Rotors, insbesondere durch die Lamellenteilung eines Kommutators angeregt wird, nicht auf den Träger und damit nicht auf das den Träger aufnehmende Gehäuse der Maschine übertragen und als störende Laufgeräusche abgestrahlt werden. Die Schwingungsabkopplung des Schleifkörpers wird in einfacher Weise durch eine abgestimmte Form- bzw. Geometriegestaltung der Blattfeder sowohl in Radialrichtung als auch in Tangential- oder Umfangsrichtung, jeweils bezogen auf den Rotor, erreicht. Durch die in den weiteren Ansprüche aufgeführten Maßnahmen sind vorteilhafte Weiterbildungen und Verbesserungen des im Anspruch 1 angegebenen Schleifkörperhalters möglich.

Gemäß einer bevorzugten Ausführungsform der Erfindung weist die Blattfeder einen den Schleifkörper tragenden, gewölbten Blattrücken und endseitig am Blattrücken sich fortsetzende Federschenkel auf, die in Richtung des Blattrückens einerseits und in Richtung der Normalen des Blattrückens andererseits, bei montiertem Schleifkörperhalter also radial zum Rotor, nachgiebig ausgebildet sind.

Vorteilhaft sind dabei gemäß einer weiteren Ausführungsform der Erfindung der Blattrücken und die beiden Federschenkel einstückig aus einem gemeinsamen Materialstreifen gefertigt und die Federschenkel von abgebogenen Abschnitten des Materialstreifens gebildet, die zur Einstellung der Nachgiebigkeit mindestens teilweise mittig ausgespart sind. Diese Gestaltung der Federgeometrie lässt eine relativ feine Abstimmung der Federsteifigkeit der Blattfeder auf die am Schleifkörper auftretende Schwingungsfrequenz zu.

Gemäß einer vorteilhaften Ausführungsform der Erfindung verläuft ein an den Blattrücken sich anschließender, abgebogener oder abgewinkelter erster Abschnitt eines Federschenkels auf der vom Schleifkörper abgekehrten Rückseite des Blattrückens etwa rechtwinklig zum Blattrücken, ein vom ersten Abschnitt um etwa 90° abgebogener zweiter Abschnitt des Federschenkels etwa parallel zum Blattrücken, ein vom zweiten Abschnitt um etwa 90° zum Blattrücken hin abgebogener dritter Abschnitt parallel zum ersten Abschnitt und ein vom dritten Abschnitt um etwa 90° weg vom ersten Abschnitt abgebogener vierter Abschnitt etwa rechtwinklig zum ersten Abschnitt, wobei der vierte Abschnitt endseitig im Träger eingespannt ist. Durch diese Ausbildung der Federschenkel können auf engem Bauraum im Träger mehrere Blattfedern mit Schleifkörper untergebracht werden.

Gemäß einer vorteilhaften Ausführungsform der Erfindung sind an den beiden vierten Abschnitten der Federschenkel jeweils eine Kontaktfahne zur Stromzuführung bzw. Stromabnahme befestigt, wobei die Befestigung durch Nieten, Löten oder Schweißen vorgenommen ist. Dies ist dann der Fall, wenn die Blattfeder selbst keine ausreichende Blechdicke aufweist, um den vierten Abschnitt der Federschenkel direkt als Kontakte verwenden zu können. Alternativ können die Kontaktfahnen auch einstückig mit den Federschenkeln hergestellt werden, indem die Schenkelenden durch mehrmaliges Falten und Aufeinanderlegen auf eine für einen Kontakt notwendige Dicke gebracht werden.

Gemäß einer vorteilhaften Ausführungsform der Erfindung weist der Blattrücken der Blattfeder an seinen in Umfangsrichtung sich erstreckenden Längsseiten zum Schleifkörper hin vorstehende Abkantungen auf. Die Breite des Blattrückens ist so bemessen, dass der Schleifkörper zwischen den Abkantungen formschlüssig aufgenommen ist. Diese Abkantungen oder Umbördelungen des Blattrückens dienen einerseits zur Einstellung der radialen Steifigkeit der Blattfeder und andererseits zur definierten Weiterleitung der am Schleifkörper auftretenden Umfangskräfte an die Federschenkel. Dadurch wird eine Anstell- oder Verkantbewegung, die der Schleifkörper beim Rotieren des Rotors in Umfangsrichtung ausführt, minimiert und dadurch der Schleifkontakt zum Rotor verbessert. Zusätzlich sorgen die Abkantungen für eine Verdrehsicherung des Schleifkörpers um seine in Radialrichtung des Rotors weisende Hochachse.

### Zeichnung

Die Erfindung ist anhand eines in der Zeichnung dargestellten Ausführungsbeispiels in der nachfolgenden Beschreibung näher erläutert. Es zeigen:
- Fig. 1: eine Draufsicht eines Bürstenhalters für eine als Innenläufermaschine ausgebildete Kommutatormaschine,
- Fig. 2: eine perspektivische Ansicht einer Blattfeder mit Schleifkörper des Bürstenhalters in Fig. 1,
- Fig. 3: ausschnittweise eine vergrößerte Darstellung des Bürstenhalters in Fig. 1 bei fehlendem Kommutator,
- Fig. 4: eine gleiche Darstellung wie in Fig. 3 mit eingesetztem Kommutator.

### Beschreibung des Ausführungsbeispiels

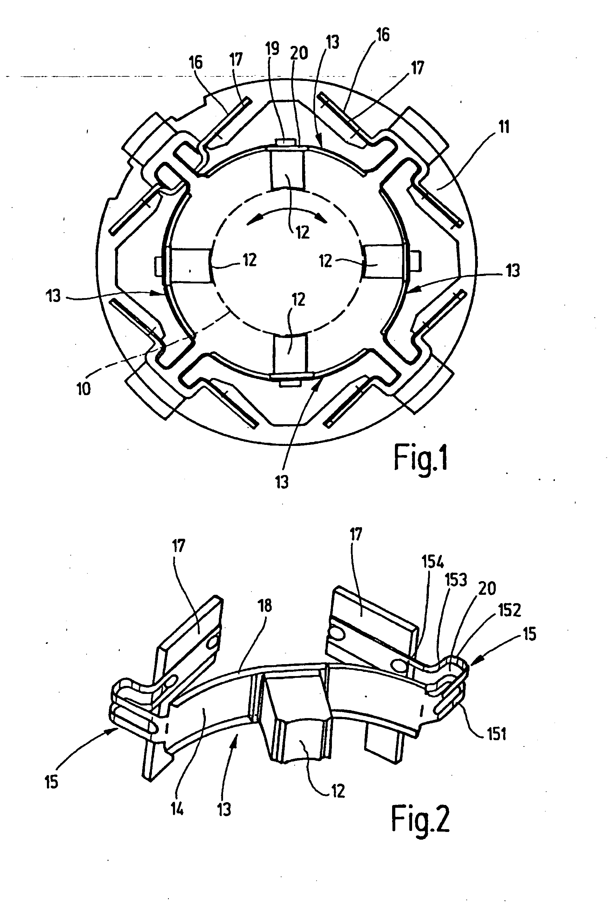

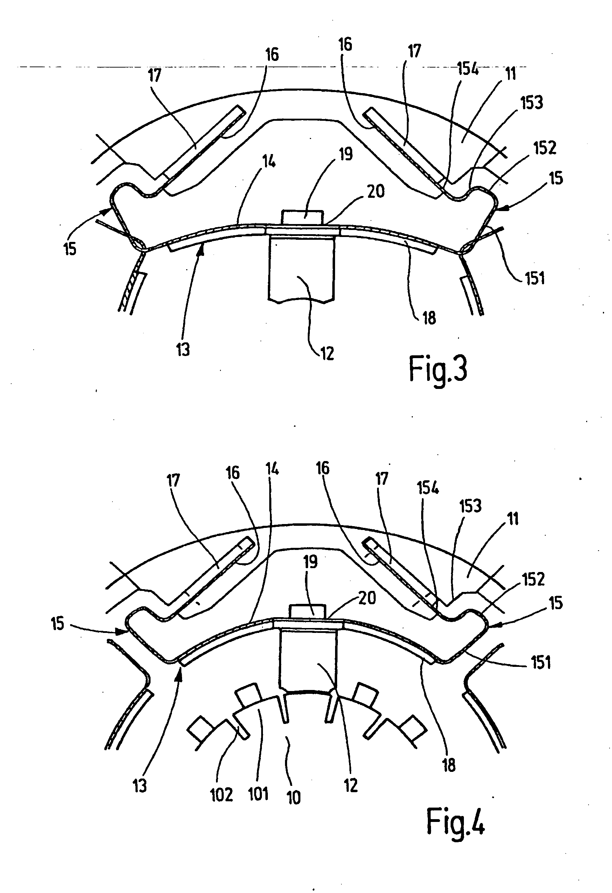

In Fig. 1 ist als Ausführungsbeispiel für einen Schleifkörperhalter zum elektrischen Kontaktieren eines Rotors ein Bürstenhalter für eine als Innenläufermaschine ausgebildeten Kommutatormaschine, Motor oder Generator, in Draufsicht dargestellt. Der Bürstenhalter weist einen ringförmigen Träger 11 auf, der vorzugsweise aus Kunststoff hergestellt ist und im montierten Zustand konzentrisch einen auf der Rotor- oder Läuferwelle der Kommutatormaschine drehfest sitzenden Kommutator umschließt. Der Kommutator der Kommutatormaschine ist in Fig. 1 strichliniert angedeutet und in Fig. 4 ausschnittweise in Draufsicht dargestellt. Üblicherweise sind am Umfang des Kommutators 10 Kommutatorlamellen 101 ausgebildet, die durch schmale Nuten 102 voneinander elektrisch getrennt sind.

Der Bürstenhalter weist insgesamt vier Schleifkörper 12, auch Kommutator- oder Kohlebürsten genannt, auf, die um gleiche Umfangswinkel zueinander versetzt am Kommutator 10 angeordnet und mit ihrer nach innen weisenden Stirnseite auf den Kommutator 10 mit Federkraft aufgepresst sind. Jeder Schleifkörper 12 ist mittig an einer Blattfeder 13 befestigt, die endseitig im Träger 11 festgelegt ist und die radialgerichtete Anpresskraft zum Aufpressen des Schleifkörpers 12 auf den Kommutator 10 erzeugt. Dabei ist die Geometrie der Blattfeder 13 so gestaltet, dass eine Schwingungsentkopplung des Schleifkörpers 12 von dem Träger 11 besteht und dadurch die Schwingungen, die durch fertigungsbedingte Formungenauigkeiten des Kommutators 10 und insbesondere durch die Nutung des Kommutators 10 angeregt werden, nicht auf den Träger 11 und damit auf das Gehäuse der Kommutatormaschine übertragen und über das Gehäuse als störende Laufgeräusche hoher Frequenz abgestrahlt werden.

Die hierzu vorgenommene Geometriegestaltung der Blattfeder 13 ist insbesondere aus Fig. 2 zu erkennen. Die Blattfeder 13 weist einen den Schleifkörper 12 mittig tragenden, gewölbten Blattrücken 14 und zwei endseitig am Blattrücken 14 sich links und rechts fortsetzende, identisch ausgebildete Federschenkel 15 auf, die in Längsrichtung des Blattrückens 14, also in Umfangrichtung des Kommutators 10, einerseits und in Richtung der Normalen des Blattrückens 14, also radial zum Kommutator 10, andererseits nachgiebig ausgebildet sind. Der Blattrücken 14 und die beiden Federschenkel 15 sind einstückig aus einem gemeinsamen Materialstreifen, vorzugsweise aus einem kupferlegierten Federblech, gefertigt. Die Federschenkel 15 sind dabei durch Abbiegen oder Abwinkeln von Abschnitten 151 bis 154 des Materialstreifens gebildet. Die Abschnitte 151 - 154 sind zur Feineinstellung der Nachgiebigkeit der Federschenkel 15 mindestens teilweise mittig ausgespart. Das Abbiegen oder Abwinkeln ist so vorgenommen, dass in jedem Federschenkel 15 ein an den Blattrücken 14 sich anschließender, um ca. 90° abgewinkelter oder abgebogener erster Abschnitt 151 von der vom Schleifkörper 12 abgekehrten Rückseite des Blattrückens 14 absteht, ein vom ersten Abschnitt um etwa 90° abgebogener zweiter Abschnitt 152 etwa parallel zum Blattrücken 14 verläuft, ein vom zweiten Abschnitt 152 um etwa 90° zum Blattrücken 14 hin abgebogener dritter Abschnitt 153 etwa parallel zum ersten Abschnitt 151 verläuft und ein vom dritten Abschnitt 153 um etwa 90° weg vom ersten Abschnitt abgebogener vierter Abschnitt 154 etwa rechtwinklig zum ersten Abschnitt 151 verläuft. Die Winkelangabe für die Abwinkelungen der Abschnitte 151 - 154 trifft nur für das hier beschriebene Ausführungsbeispiel zu. Selbstverständlich ist es möglich, andere Winkelwerte für die Abwinkelungen zu wählen. Die zur Feinabstimmung der Federsteifigkeit in den Federschenkeln 15 vorhandene Aussparung 16 durchläuft den ersten Abschnitt 151, den zweiten Abschnitt 152 und den dritten Abschnitt 153 des Federschenkels 15 und reicht teilweise in den vierten Abschnitt 154 des Federschenkels 15 hinein. Das daran sich anschließende, nicht ausgesparte Ende des vierten Abschnitts 154 der Federschenkel 15 ist am Träger 11 festgelegt. Hierzu weist der ringförmige Träger 11 vier im gleichen Abstand voneinander am Umfang versetzte Paare von Axialschlitzen 16 auf, wobei die Axialschlitze 16 eines jeden Paars symmetrisch zu einer radialen Symmetrieachse angeordnet sind und die Symmetrieachsen der Paare um gleiche Umfangswinkel zueinander versetzt sind. In jedem Axialschlitz 16 eines Paars ist eine Blattfeder 13 mit dem Ende des vierten Abschnitts 154 der beiden Federschenkel 15 formschlüssig eingeklemmt.

Die elektrische Kontaktierung der Schleifkörper 12 erfolgt über die Blattfedern 13, wobei die hier nicht gezeigten Anschlusslitzen an Kontaktfahnen 17 angeschlossen sind. Jeweils eine Kontaktfahne 17 ist an dem Ende des vierten Abschnitts 154 der Federschenkeln 15 befestigt, z.B. angenietet, wie dies in Fig. 2 dargestellt ist, oder angelötet oder angeschweißt. Die Kontaktfahnen 17 sind zusammen mit den Enden der vierten Abschnitte 154 der Federschenkel 15 in den Axialschlitzen 16 im Träger 11 eingeklemmt. Die Kontaktfahnen 17 können entfallen, wenn die Blattfeder 13 eine ausreichende Blattdicke aufweist und dadurch als direkter Kontakt für die Anschlusslitzen oder als direkter Steckerkontakt für die Steckeranbindung verwendet werden kann. Auch kann eine Kontaktfahne oder ein Steckerkontakt mit der erforderlichen Dicke durch mehrmaliges Falten und Aufeinanderlegen der Schenkelenden der Federschenkel 15 gebildet werden.

Der Blattrücken 14 ist an seinen in Umfangsrichtung des Kommutators 10 sich erstreckenden Längsseiten mit Abkantungen 18 versehen, die vom Blattrücken 14 auf der den Schleifkörper 12 tragenden Vorderseite des Blattrückens 14 rechtwinklig zum Blattrücken 14 vorstehen. Die Breite des Blattrückens 14 in Axialrichtung ist so bemessen, dass der Schleifkörper 12 zwischen den einander gegenüberliegenden Abkantungen 18 formschlüssig aufgenommen ist, wodurch ein Verdrehen des Schleifkörpers 12 relativ zum Blattrücken 14 verhindert ist. Der Schleifkörper 12 ist am Blattrücken befestigt, wobei die Befestigung in verschiedener Weise vorgenommen werden kann, z.B. durch Kleben, Löten und dgl. Im Ausführungsbeispiel trägt der Schleifkörper 12 auf seiner vom Kommutator 10 abgekehrten Stirnseite einen Zapfen 19, der durch eine Aussparung 20 im Blattrücken 14 hindurchragt und auf der Rückseite des Blattrückens 14 am Blattrücken 14 in geeigneter Weise verspannt, z.B. vernietet ist (Fig. 1, 3 und 4).

Wie aus Fig. 3 hervorgeht, hat der Blattrücken 14 bei in dem Träger 11 eingespannten Blattfeder 13 eine relativ flache Wölbung. Diese Wölbung wird durch Einschieben des Kommutators 10 in das Innere des Bürstenhalters, was ein radiales Verschieben der Schleifkörper 12 nach außen bewirkt, stark vergrößert, wodurch die Blattfeder 13 vorgespannt wird und der Blattrücken 14 im wesentlichen konzentrisch zu einem Abschnitt des Kommutators 10 verläuft, wie dies in Fig. 4 dargestellt ist.

Der beispielhaft als Bürstenhalter für eine Kommutatormaschine beschriebene Schleifkörperhalter zur Herstellung einer elektrischen Verbindung zu einem Rotor, im Ausführungsbeispiel zum Kommutator 10, ist auch bei sog. Schleifringmaschinen, z.B. Synchronmaschinen mit Schleifringläufern, einsetzbar. In diesem Fall liegen die Schleifbürsten genannten Schleifkörper auf den Schleifringen auf, die drehfest auf der Antriebswelle des Rotors sitzen und die Erregerwicklung mit Erregerstrom versorgen. Darüber hinaus kann der beschriebene Schleifkörperhalter überall dort Anwendung finden, wo ein elektrischer Berührungskontakt zwischen einem räumlich feststehenden, stromführenden Bauteil und einem dazu rotierenden, stromführenden Bauteil hergestellt werden soll. Selbstverständlich kann die Anzahl der Schleifkörper mit Blattfeder mehr oder weniger als vier betragen.

## Patentansprüche

1. Schleifkörperhalter zum elektrischen Kontaktieren eines Rotors, insbesondere Bürstenhalter für eine Kommutator- oder Schleifringmaschine, mit mindestens einem Schleifkörper (12) und einer den Schleifkörper (12) mittig tragenden Blattfeder (13), die endseitig an einem relativ zum Rotor feststehenden Träger (11) festgelegt ist und an dem Schleifkörper (12) eine radialgerichtete Anpresskraft zum Aufpressen des Schleifkörpers (12) auf den Rotor erzeugt, wobei die Geometrie der Blattfeder (13) so gestaltet ist, dass Schleifkörper (12) und Träger (11) voneinander weitgehend schwingungsentkoppelt sind, **dadurch gekennzeichnet daß** die Blattfeder (13) einen den Schleifkörper (12) tragenden, gewölbten Blattrücken (14) und zwei an beiden Enden des Blattrückens (14) sich fortsetzende Federschenkel (15) aufweist, die in Längsrichtung des Blattrückens (14) und in Richtung der Normalen des Blattrückens (14) nachgiebig ausgebildet sind.

2. Schleifkörperhalter nach Anspruch 1, **dadurch gekennzeichnet, dass** der Blattrücken (14) und die beiden Federschenkel (15) einstückig aus einem gemeinsamen Materialstreifen gefertigt sind und dass die Federschenkel (15) von abgebogenen Abschnitten (151 - 154) des Materialstreifens gebildet sind, die zur Einstellung der Nachgiebigkeit mindestens teilweise mittig ausgespart sind.

3. Schleifkörperhalter nach Anspruch 2, **dadurch gekennzeichnet, dass** der Materialstreifen ein kupferlegiertes Federblech ist.

4. Schleifkörperhalter nach Anspruch 2 oder 3, **dadurch gekennzeichnet, dass** jeder Federschenkel (15) einen an dem Blattrücken (14) sich anschließenden, ersten Abschnitt (151), der zum Blattrücken (14) hin so abgewinkelt ist, dass er auf der vom Schleifkörper (12) abgekehrten Rückseite des Blattrückens (14) liegt, einen zweiten Abschnitt (152), der vom ersten Abschnitt (151) so abgewinkelt ist, dass er zum anderen Federschenkel (15) hin weist, vorzugsweise etwa parallel zum Blattrücken (14) verläuft, einen dritten Abschnitt (153), der vom zweiten Abschnitt (152) so abgewinkelt ist, dass er zum Blattrücken (14) hin, vorzugsweise etwa parallel zum ersten Abschnitt (151) verläuft, und einen vierten Abschnitt (154) aufweist, der vom dritten Abschnitt (153) so abgewinkelt ist, dass er weg vom ersten Abschnitt (151), vorzugsweise etwa rechtwinklig zum ersten Abschnitt (151), verläuft und endseitig im Träger (11) eingespannt ist, und dass eine mittige Aussparung (20) den ersten, zweiten und dritten Abschnitt (151,152,153) durchläuft und vorzugsweise sich teilweise in den vierten Abschnitt (154) hinein erstreckt.

5. Schleifkörperhalter nach Anspruch 4, **dadurch gekennzeichnet, dass** der vierte Abschnitt (154) in einem im Träger (11) vorhandenen Axialschlitz (16) eingeklemmt ist.

6. Schleifkörperhalter nach Anspruch 4 oder 5, **dadurch gekennzeichnet, dass** an den beiden vierten Abschnitten (154) der Federschenkel (15) jeweils eine Kontaktfahne (17) zur Stromzuführung bzw. -abnahme befestigt, vorzugsweise vernietet, verlötet oder verschweißt, ist.

7. Schleifkörperhalter nach Anspruch 4 oder 5, **dadurch gekennzeichnet, dass** an den beiden vierten Abschnitten (154) der Federschenkel (15) durch mehrmaliges Falten und Aufeinanderlegen der Enden des Materialstreifens eine Kontaktfahne oder ein Kontaktstecker zur direkten Steckeranbindung ausgebildet ist.

8. Schleifkörperhalter nach einem der Ansprüche 1- 7, **dadurch gekennzeichnet, dass** der Blattrücken (14) an seinen Längsseiten zum Schleifkörper (12) hin abstehende Abkantungen (18) aufweist und dass die Breite des Blattrückens (14) so bemessen ist, dass der Schleifkörper (12) zwischen den Abkantungen (18) vorzugsweise formschlüssig aufgenommen ist.

9. Schleifkörperhalter nach einem der Ansprüche 1 - 8, **dadurch gekennzeichnet, dass** der Blattrücken (14) der in dem Träger (11) eingespannten Blattfeder (13) eine relativ flache Wölbung aufweist, die durch Aufschieben der Schleifkörper (12) auf den Rotor (10) unter Erhöhung der Vorspannung der Blattfeder (13) so vergrößert wird, dass der Blattrücken (14) in etwa konzentrisch zum Rotor verläuft.

10. Schleifkörperhalter nach einem der Ansprüche 5 - 9, **dadurch gekennzeichnet, dass** der Träger (11) als Ring ausgebildet ist und um gleiche Abstände am Umfang zueinander versetzte Paare von Axialschlitzen (16) zum formschlüssigen Einklemmen der Federschenkel (15) einer geradzahligen Anzahl, vorzugsweise zwei, von jeweils einen Schleifkörper (12) tragenden Blattfedern (13) aufweist.

11. Kommutatormaschine, insbesondere ein Elektromotor, mit einem auf einer Rotorwelle drehfest angeordneten Kommutator, der konzentrisch von einem ringförmigen Träger (11) umschlossen ist, und mittels Schleifkörperhalter mit dem Kommutator (10) elektrisch verbunden ist, **dadurch gekennzeichnet dass** die Schleifkörperhalter nach einem der Ansprüche 1 bis 10 ausgebildet sind.

## Claims

1. Sliding-body holder for making electrical contact with a rotor, in particular a brush holder for a commutator or slip-ring machine, having at least one sliding body (12) and a leaf spring (13) which, at its centre, supports the sliding body (12) and, at its end, is fixed to a support (11) which is stationary relative to the rotor and generates a radially directed contact-pressure force on the sliding body (12) in order to press the sliding body (12) onto the rotor, with the geometry of the leaf spring (13) being such that the sliding body (12) and the support (11) are largely vibrationally decoupled from one another, **characterized in that** the leaf spring (13) has a curved leaf back (14), which supports the sliding body (12), and two spring limbs (15) which continue at the two ends of the leaf back (14) and are formed so as to be flexible in the longitudinal direction of the leaf back (14) and in the direction of the normal of the leaf back (14).

2. Sliding-body holder according to Claim 1, **characterized in that** the leaf back (14) and the two spring limbs (15) are integrally produced from a common material strip, and **in that** the spring limbs (15) are formed from bent portions (151-154) of the material strip, which portions have a cutout at least partially in the centre for the purpose of adjusting the flexibility.

3. Sliding-body holder according to Claim 2, **characterized in that** the material strip is a copper-alloyed spring metal sheet.

4. Sliding-body holder according to Claim 2 or 3, **characterized in that** each spring limb (15) has a first portion (151) which adjoins the leaf back (14) and is angled away in relation to the leaf back (14) such that it rests on the rear face of the leaf back (14) which is averted from the sliding body (12), a second portion (152) which is angled away from the first portion (151) such that it points towards the other spring limb (15), preferably runs approximately parallel to the leaf back (14), a third portion (153) which is angled away from the second portion (152) such that it runs towards the leaf back (14), preferably approximately parallel to the first portion (151), and a fourth portion (154) which is angled away from the third portion (153) such that it runs away from the first portion (151), preferably approximately at a right angle to the first portion (151), and is clamped in the support (11) at its end, and **in that** a central cutout (20) runs through the first, second and third portion (151, 152, 153) and preferably extends partially into the fourth portion (154).

5. Sliding-body holder according to Claim 4, **characterized in that** the fourth portion (154) is clamped into an axial slot (16) which is present in the support (11).

6. Sliding-body holder according to Claim 4 or 5, **characterized in that** a contact lug (17) for supplying and drawing power is attached, preferably riveted, soldered or welded, to the two fourth portions (154) of the spring limbs (15) in each case.

7. Sliding-body holder according to Claim 4 or 5, **characterized in that** a contact lug or a contact connector for direct plug connection is formed on the two fourth portions (154) of the spring limbs (15) by multiple folding and layering of the ends of the material strip.

8. Sliding-body holder according to one of Claims 1-7, **characterized in that** the leaf back (14) has, on its longitudinal sides, bevelled edges (18) which project towards the sliding body (12), and **in that** the width of the leaf back (14) is such that the sliding body (12) is held, preferably in an interlocking manner, between the bevelled edges (18).

9. Sliding-body holder according to one of Claims 1-8, **characterized in that** the leaf back (14) of the leaf spring (13) clamped in the support (11) has a relatively shallow curvature which is increased by pushing the sliding body (12) onto the rotor (10), so as to increase the prestress of the leaf spring (13), such that the leaf back (14) runs approximately concentrically to the rotor.

10. Sliding-body holder according to one of Claims 5-9, **characterized in that** the support (11) is in the form of a ring and has pairs of axial slots (16), which are offset from one another by identical distances on the circumference, for the purpose of interlocking clamping of the spring limbs (15) of an even number of, preferably two, leaf spring (13) which in each case support a sliding body (12).

11. Commutator machine, in particular an electric motor, having a commutator which is arranged in a rotationally fixed manner on a rotor shaft and is concentrically surrounded by an annular support (11), and is electrically connected to the commutator (10) by means of sliding-body holders, **characterized in that** the sliding-body holders are formed according to one of Claims 1 to 10.

## Revendications

1. Porte-frotteurs pour le contact électrique d'un rotor, notamment porte-balais pour une machine à collecteur ou à bagues collectrices, comprenant au moins un frotteur (12) et un ressort à lame (13) portant centralement le frotteur (12), qui est fixé à une extrémité à un support (11) fixé par rapport au rotor, et qui produit au niveau du frotteur (12) une force de pression orientée radialement pour presser le frotteur (12) contre le rotor, la géométrie du ressort à lame (13) étant telle que le frotteur (12) et le support (11) soient sensiblement désaccouplés l'un de l'autre en termes d'oscillations, **caractérisé en ce que** le ressort à lame (13) présente un dos de lame cintré (14) portant le frotteur (12) et deux branches de ressort (15) se prolongeant aux deux extrémités du dos de lame (14), qui sont réalisées de manière flexible dans la direction longitudinale du dos de lame (14) et dans la direction de la normale au dos de lame (14).

2. Porte-frotteurs selon la revendication 1, **caractérisé en ce que** le dos de lame (14) et les deux branches de ressort (15) sont fabriquées d'une seule pièce en une bande de matériau commune, et **en ce que** les branches de ressort (15) sont formées par des portions recourbées (151 - 154) de la bande de matériau, qui sont au moins partiellement évidées centralement pour ajuster la flexibilité.

3. Porte-frotteurs selon la revendication 2, **caractérisé en ce que** la bande de matériau est une tôle à ressort à alliage de cuivre.

4. Porte-frotteurs selon la revendication 2 ou 3, **caractérisé en ce que** chaque branche de ressort (15) présente une première portion (151) se raccordant au dos de lame (14), qui est coudée par rapport au dos de lame (14) de telle sorte qu'elle se situe du côté arrière du dos de lame (14) opposé au frotteur (12), une deuxième portion (152) qui est coudée par rapport à la première portion (151) de telle sorte qu'elle soit tournée vers l'autre branche de ressort (15), de préférence qu'elle s'étende approximativement parallèlement au dos de lame (14), une troisième portion (153) qui est coudée depuis la deuxième portion (152) de telle sorte qu'elle s'étende vers le dos de lame (14), de préférence approximativement parallèlement à la première portion (151), et une quatrième portion (154) qui est coudée depuis la troisième portion (153) de telle sorte qu'elle s'étende à l'écart de la première portion (151), de préférence approximativement à angle droit par rapport à la première portion (151), et qu'elle soit serrée dans le support (11) du côté de son extrémité, et **en ce qu'**un évidement central (20) traverse la première, la deuxième et la troisième portion (151, 152, 153) et s'étend de préférence partiellement dans la quatrième portion (154).

5. Porte-frotteurs selon la revendication 4, **caractérisé en ce que** la quatrième portion (154) est serrée dans une fente axiale (16) prévue dans le support (11).

6. Porte-frotteurs selon la revendication 4 ou 5, **caractérisé en ce que** qu'une languette de contact (17) pour l'alimentation ou le prélèvement de courant est fixée aux deux quatrièmes portions (154) des branches de ressort (15), de préférence par rivetage, brasage ou soudage.

7. Porte-frotteurs selon la revendication 4 ou 5, **caractérisé en ce qu'**une languette de contact ou une fiche de contact est réalisée pour la liaison par enfichage directe sur les deux quatrièmes portions (154) des branches de ressort (15) par pliage et superposition successifs des extrémités de la bande de matériau.

8. Porte-frotteurs selon l'une quelconque des revendications 1 à 7, **caractérisé en ce que** le dos de lame (14) présente sur ses côtés longitudinaux des rebords (18) saillant vers le frotteur (12), et **en ce que** la largeur du dos de lame (14) est dimensionnée de telle sorte que le frotteur (12) soit reçu de préférence par engagement par correspondance géométrique entre les rebords (18).

9. Porte-frotteurs selon l'une quelconque des revendications 1 à 8, **caractérisé en ce que** le dos de lame (14) du ressort à lame (13) serré dans le support (11) présente une courbure relativement plate, qui est accrue par enfoncement des frotteurs (12) sur le rotor (10) en augmentant la précontrainte du ressort à lame (13) de telle sorte que le dos de lame (14) s'étende approximativement concentriquement au rotor.

10. Porte-frotteurs selon l'une quelconque des revendications 5 à 9, **caractérisé en ce que** le support (11) est réalisé sous forme de bague et présente des paires de fentes axiales (16) décalées de manière équidistante les unes des autres sur la périphérie, pour le serrage par engagement par correspondance géométrique des branches de ressort (15) d'un nombre entier de, de préférence de deux, ressorts à lames (13) portant chacun un frotteur (12).

11. Machine à collecteur, en particulier moteur électrique, comprenant un collecteur disposé de manière solidaire en rotation sur un arbre de rotor, qui est entouré concentriquement par un support annulaire (11), et qui est relié électriquement au moyen de porte-frotteurs au collecteur (10), **caractérisée en ce que** les porte-frotteurs sont réalisés selon l'une quelconque des revendications 1 à 10.
